# FASCICULE DE BREVET EUROPEEN

(11) **EP 0 507 643 B1**
(45) Date de publication et mention de la délivrance du brevet: **04.01.1995**
(21) Numéro de dépôt: 92400731.3
(22) Date de dépôt: 19.03.1992
(51) Int. Cl.: B41M 1/12, B41M 1/34, B41F 15/08

(54) **Procédé pour imprimer une couche décorative en forme de cadre sur un vitrage**
Verfahren zum Drucken einer rahmenförmigen Dekorschicht auf eine Fahrzeugscheibe
Method for printing a frame formed decorative layer onto a motor vehicle glazing

(30) Priorité: 23.03.1991 DE 4109710
(43) Date de publication de la demande: 07.10.1992
(73) Titulaire: SAINT-GOBAIN VITRAGE INTERNATIONAL, 92400 Courbevoie (FR); VEGLA Vereinigte Glaswerke GmbH, D-52066 Aachen (DE)
(72) Inventeur: Andersson, Kjell, S-281 49 Hässleholm (SE); Liden, Carl, S-241 30 Eslöv (SE); Eronen, Raimo, S-435 00 Mölnlycke (SE); Ohlenforst, Hans, W-5100 Aachen (DE); Hahn, Dieter, W-5132 Übach-Palenberg (DE); Lacoste, Jean-Pierre, W-5100 Aachen (DE)
(74) Mandataire: Muller, René

(56) Documents cités:
- DE-A- 4 020 972

## Description

La présente invention concerne un procédé pour imprimer sur un vitrage une couche décorative qui, dans un domaine sélectionné, s'étend exactement jusqu'à la face périphérique du vitrage.

Les vitrages automobiles sont fréquemment pourvus, le long d'un bord ou de la totalité de leur pourtour, d'une couche décorative opaque, en règle générale d'une encre à cuire. La sérigraphie s'est avérée particulièrement satisfaisante pour l'application de la couche décorative sur la surface du vitrage. L'encre est habituellement cuite à des températures de 550 à 600°C ou plus, au cours du traitement thermique nécessaire pour le bombage et/ou la trempe des vitrages.

Souvent, les vitrages, lorsqu'ils sont montés, ne sont plus garnis d'un encadrement en profilés enserrant leur bord ou le chevauchant, mais sont au contraire visibles de l'extérieur jusqu'à leur bord. Cela signifie que l'impression décorative marginale est également visible jusqu'au bord périphérique du vitrage. Des irrégularités de la limite extérieure du cadre décoratif, en particulier des espacements légèrement différents entre la limite extérieure du cadre décoratif et le bord du vitrage, s'avèrent très gênantes. C'est pourquoi, il est d'un grand intérêt d'appliquer la couche d'encre formant le cadre décoratif, par impression, dans des domaines sélectionnés ou le long de la totalité de la périphérie du vitrage, exactement jusqu'au bord périphérique de ce vitrage.

Dans les procédés d'impression traditionnels, en particulier en sérigraphie, il est, pour diverses raisons, difficile de réaliser une application précise d'un décor allant exactement jusqu'au bord du vitrage. D'une part, les vitrages présentent en effet, en règle générale, certaines tolérances dimensionnelles admissibles alors qu'ils sont tous imprimés à l'aide d'un seul et même pochoir. D'autre part, les opérations de positionnement des vitrages à imprimer et des outils d'impression sont également liées à des tolérances qui s'ajoutent, le cas échéant, aux tolérances dimensionnelles des vitrages. Lorsque la partie du pochoir qui laisse passer l'encre s'étend au-delà du bord du vitrage, de l'encre adhère à la face inférieure du pochoir sérigraphique en ces endroits. Le pochoir devient ainsi inutilisable. Pour éviter cette difficulté, l'application de l'encre, en sérigraphie, ne s'effectue habituellement que jusqu'à une certaine distance du bord du vitrage, compte tenu également du cas le plus défavorable. Une impression allant exactement jusqu'au bord du vitrage n'est pas possible, dans l'état actuel de la technique, en tout cas lors d'une impression en série par sérigraphie.

L'invention a pour but de procurer un procédé dans lequel, indépendamment des tolérances de surface des vitrages et indépendamment des tolérances de positionnement, lors de l'opération d'impression, la couche décorative appliquée s'étende, au moins dans un domaine sélectionné, exactement jusqu'au bord périphérique du vitrage.

Suivant l'invention, ce but est atteint par le fait qu'au moins dans le domaine sélectionné du vitrage, un élément plan qui élargit la surface à imprimer au-delà du bord du vitrage est disposé tout contre ce bord du vitrage, la couche décorative est imprimée au-delà du bord du vitrage jusque sur l'élément plan et, après séchage de l'encre, l'élément plan est séparé du vitrage.

Dans le cas du procédé conforme à l'invention, le pochoir est conçu d'une manière telle que la surface d'impression, même dans le cas le plus défavorable des tolérances dimensionnelles et des conditions de positionnement, s'étende de l'ordre de quelques millimètres au-delà du bord du vitrage. De cette façon, l'encre est appliquée non seulement jusqu'au bord du vitrage, mais au-delà de celui-ci, également sur une surface qui s'y raccorde, qui forme avec la surface adjacente du vitrage une face plane plus ou moins cohérente et continue. L'élément plan qui s'étend au-delà du bord du vitrage est détaché de ce vitrage après le séchage de l'encre. Le cas échéant, l'élément plan peut être réutilisé pour l'impression du vitrage suivant. Dans un développement avantageux de l'invention, l'élément plan détaché du vitrage, après l'opération d'impression, est cependant jeté et un élément plan neuf est utilisé pour chaque vitrage.

Le procédé conforme à l'invention peut être réalisé de diverses manières.

Par exemple, selon une première forme de réalisation du procédé, on peut coller une bande profilée, faite d'une matière adéquate de quelques millimètres d'épaisseur et de section transversale, rectangulaire, sur la face périphérique du vitrage, d'une manière telle qu'une face de délimitation plane de la bande profilée forme un prolongement de la surface du vitrage.

Suivant une autre forme de réalisation, l'élément plan est formé d'une matière inorganique ou organique durcissable, pouvant être coulée ou extrudée directement sur la face périphérique du vitrage. L'élément plan peut, dans ce cas, être formé à l'aide d'un moule entourant le vitrage, qui présente une cavité correspondant à l'élément plan, cette cavité étant remplie de la matière durcissable. Au lieu de cela, l'élément plan peut être formé avec la section transversale souhaitée, également directement sur la face périphérique du vitrage, à l'aide d'une filière d'extrusion adéquate. Pour ces formes de réalisation, on peut utiliser, en particulier, des polymères thermoplastiques et thermodurcissables.

Une autre forme de réalisation réside dans le fait que l'élément plan qui se raccorde au bord du vitrage est formé par une bande flexible, en particulier une bande de papier qui est maintenue, par un élément d'appui disposé à côté du vitrage, à hauteur de la surface de ce vitrage. L'élément d'appui disposé à côté du vitrage peut être, par exemple, un cadre formant pochoir dans lequel le vitrage peut être placé sur une bande de papier de soie intercalaire.

D'autres détails et avantages du procédé conforme à l'invention ressortiront des revendications dépendantes et de la description suivante de divers exemples de réalisation, donnée avec référence aux dessins.

Dans les dessins annexés :
la Fig. 1 illustre un dispositif destiné à former une bande marginale de pourtour à l'aide d'un moule à injection;
la Fig. 2 est une vue en coupe suivant la ligne II-II de la Fig. 1;
la Fig. 3 est une vue d'un vitrage sur lequel un cadre décoratif a été imprimé, avant l'enlèvement de la bande marginale;
la Fig. 4 illustre un dispositif destiné à extruder une bande marginale sur un vitrage à l'aide d'une filière d'extrusion calibrée;
la Fig. 5 illustre un moule destiné à recevoir le vitrage lors de l'opération d'impression avec une bande de papier formant l'élément plan contigu;
la Fig. 6 illustre un moule destiné à recevoir le vitrage lors de l'opération d'impression avec plusieurs bandes de papier entourant le vitrage le long de l'ensemble de sa périphérie, et
la Fig. 7 illustre une autre forme de réalisation d'un dispositif destiné à recevoir un vitrage lors de l'opération d'impression avec une bande de papier entourant le vitrage de tous côtés.

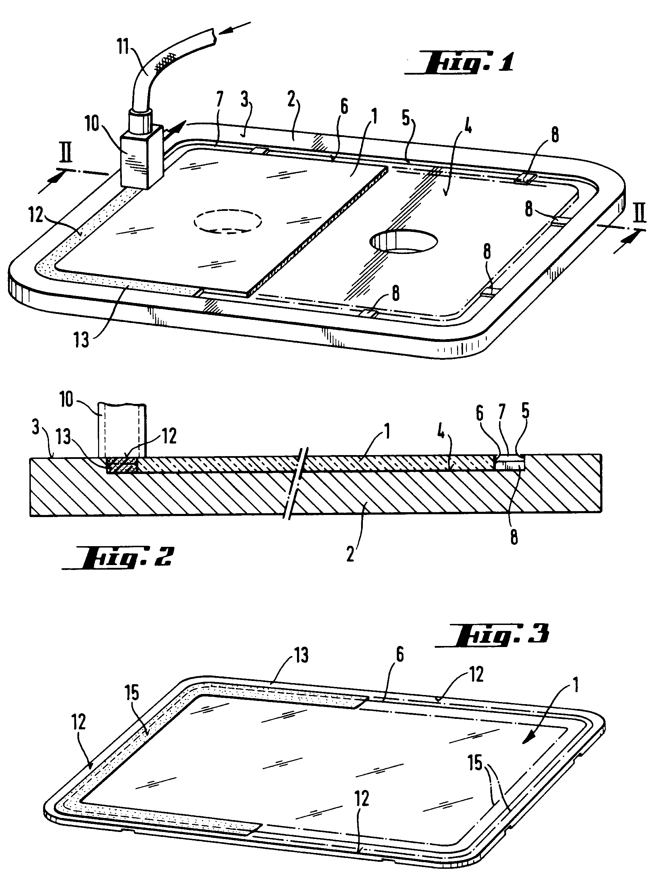

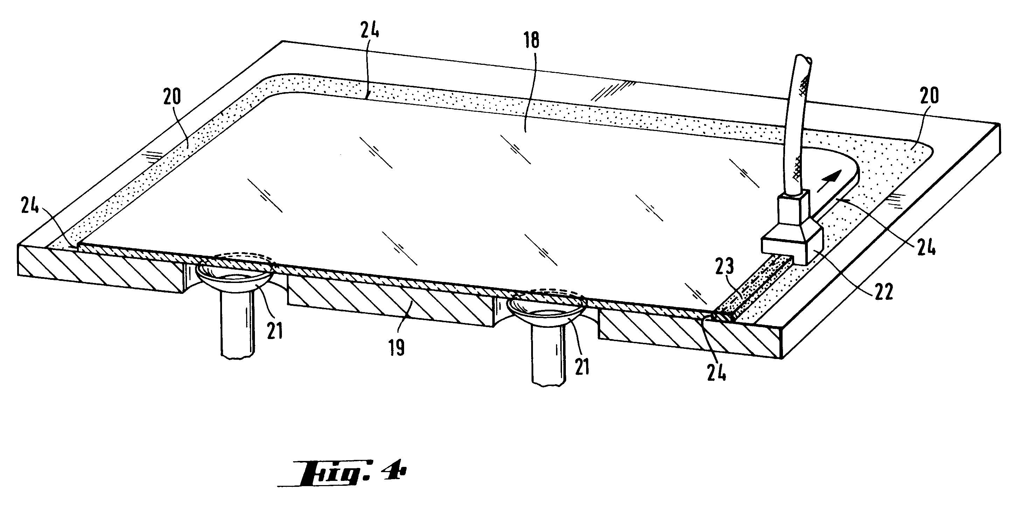

Avec référence aux Fig. 1 à 3, on décrira une première forme de réalisation d'un procédé selon lequel un vitrage 1 est pourvu, le long de sa périphérie entière, d'une bande marginale qui agrandit la surface du vitrage. A cet effet, un moule 2 est réalisé avec une surface plane 3 et un évidement 4. La forme de la paroi de délimitation interne 5 de l'évidement 4 correspond à la forme de la face périphérique 6 du vitrage 1, mais la surface de l'évidement est plus grande que celle du vitrage. Lorsque le vitrage 1 est placé dans ce moule, un interstice 7 est formé entre la face périphérique 6 du vitrage et la paroi de délimitation 5 de l'évidement 4. L'évidement 4 est dimensionné ou agencé de telle façon que la surface du vitrage 1 soit située dans le même plan que la surface 3 du moule 2. Des éléments d'entretoisement 8 sont disposés au fond de l'évidement afin de fixer la position du vitrage 1 à l'intérieur de l'évidement 4.

Avant de placer le vitrage 1 dans le moule 2, on enduit le moule d'un agent de démoulage approprié dans la zone de la paroi de délimitation 5. On remplit ensuite l'interstice 7, entre la face périphérique du vitrage et la paroi de délimitation 5 de l'évidement 4, au moyen d'une matière polymère durcissable débitée par une buse d'injection 10 qui est alimentée par un tuyau flexible 11. La surface supérieure 12 de la bande profilée 13 en forme de cadre ainsi formée, se trouve dans le même plan que la surface du vitrage 1 et forme l'élément plan dépassant le bord périphérique du vitrage 1.

Lorsque l'interstice 7 est rempli de cette façon, on laisse durcir le polymère. Ensuite, on retire le vitrage 1 du moule 2 avec la bande profilée 13 qui adhère à la face périphérique 6.

A titre de polymère pour la bande profilée 13, on peut utiliser des matières thermoplastiques, comme le PVC, ou des systèmes de réaction, comme le polyuréthanne. Bien entendu, on peut également utiliser des matières et des systèmes durcissables inorganiques pour la fabrication de la bande profilée 13.

Le cadre décoratif 15 est ensuite imprimé sur le vitrage 1 ainsi pourvu d'une bande profilée de pourtour 13, comme le montre la Fig. 3. Les dimensions extérieures du pochoir sont, dans ce cas, choisies telles que l'encre, tout le long du pourtour du vitrage 1, recouvre, au-delà de la surface du verre, une partie de la surface 12 de la bande marginale 13. L'opération d'impression s'effectue de préférence par sérigraphie.

Lorsque l'encre formant le cadre décoratif 15 est sèche, la bande marginale 13 peut être enlevée du vitrage 1. Le vitrage 1 peut alors être traité ultérieurement de la manière habituelle. Par exemple, après chauffage à la température de bombage, il peut être bombé, puis trempé. On n'enlève avantageusement la bande marginale que peu avant la pose du vitrage sur le transporteur à rouleaux du four dans lequel le vitrage est chauffé à sa température de bombage ou de trempe. De cette façon, la bande marginale en forme de cadre 13 sert, pendant les opérations d'empilage intermédiaire et de manipulation, de protection efficace pour les bords du vitrage.

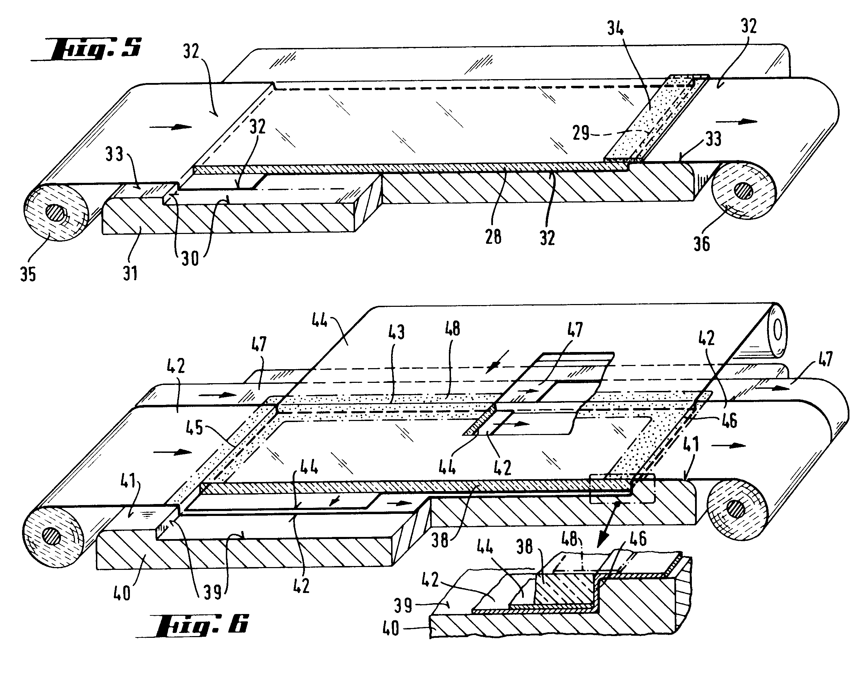

Une autre méthode permettant de munir le vitrage d'une bande marginale est illustrée schématiquement sur la Fig. 4. Dans ce cas, le vitrage 18 est posé sur une plaque plane 19, qui a été enduite au préalable, dans le domaine de l'entourage du vitrage 18, d'une couche d'agent de démoulage 20. Le vitrage 18 est maintenu sur la plaque 19, par exemple au moyen de ventouses 21. Une filière d'extrusion 22, présentant un orifice d'extrusion calibré de manière correspondante, est alors déplacée le long du pourtour du vitrage 18 et un cordon profilé 23 est extrudé directement sur la face périphérique 24. La filière d'extrusion 22 est déplacée automatiquement le long de la face périphérique 24 du vitrage 18, à l'aide d'un robot programmé de façon correspondante. L'orifice de la filière d'extrusion 22 est calibré d'une manière telle que la surface supérieure du cordon profilé 23 forme l'élément plan représentant l'agrandissement de la surface du vitrage 18. Lorsque le cordon profilé 23 est dur, on enlève le vitrage de la plaque 19.

La plaque 19 peut, par exemple, être faite de polytétrafluoroéthylène ou d'une autre matière à laquelle le cordon profilé extrudé par la filière d'extrusion 22 n'adhère pas. Dans ce cas, il est superflu d'appliquer une couche d'agent de démoulage sur la plaque 19.

Le procédé illustré, dans son principe, sur la Fig. 4 peut également être réalisé, dans le cas d'une autre variante particulièrement avantageuse, en intercalant entre la plaque plane 19 et le vitrage, une bande de papier ou de pellicule de matière plastique, sur laquelle le vitrage est posé. Cette bande de papier ou de pellicule de matière plastique est amenée, après l'application du cordon profilé 23 sur le bord du vitrage, conjointement avec le vitrage, dans le poste de sérigraphie suivant et dans le four de séchage dans lequel l'encre sérigraphique est séchée.

L'impression du cadre décoratif et le traitement ultérieur du vitrage s'effectuent de la même manière que dans l'exemple de réalisation décrit en premier lieu.

La Fig. 5 montre la structure de base d'un dispositif au moyen duquel l'élément plan agrandissant la surface du vitrage est formé par une bande de papier ou une pellicule adéquate. Dans le cas représenté, une bande décorative doit être imprimée sur un vitrage rectangulaire 28, le long d'un bord 29 de ce dernier. Le vitrage 28 est, à cet effet, placé dans l'évidement 30 d'une plaque de support 31 correspondant à la forme et à l'épaisseur du vitrage. Au-dessus de l'évidement 30 est préalablement tendue une bande de papier 32 qui est dévidée d'un rouleau d'alimentation 35 et est envidée sur le rouleau 36 au terme de l'opération d'impression. Lorsque le vitrage 28 est placé dans l'évidement 30, sur la bande de papier 32 intercalaire, la bande de papier s'applique sur les surfaces d'appui 33 adjacentes à l'évidement 30, ces surfaces se trouvant au même niveau que la surface du vitrage 28.

La bande décorative 34 est imprimée sur le vitrage 28 tandis que celui-ci se trouve de la manière représentée à l'intérieur de la plaque de support 31. Après l'opération d'impression, le vitrage peut être enlevé directement de la plaque de support 31. La bande de papier 32 est avancée d'une longueur déterminée et est envidée sur le rouleau 36 et le dispositif est prêt pour l'opération d'impression suivante.

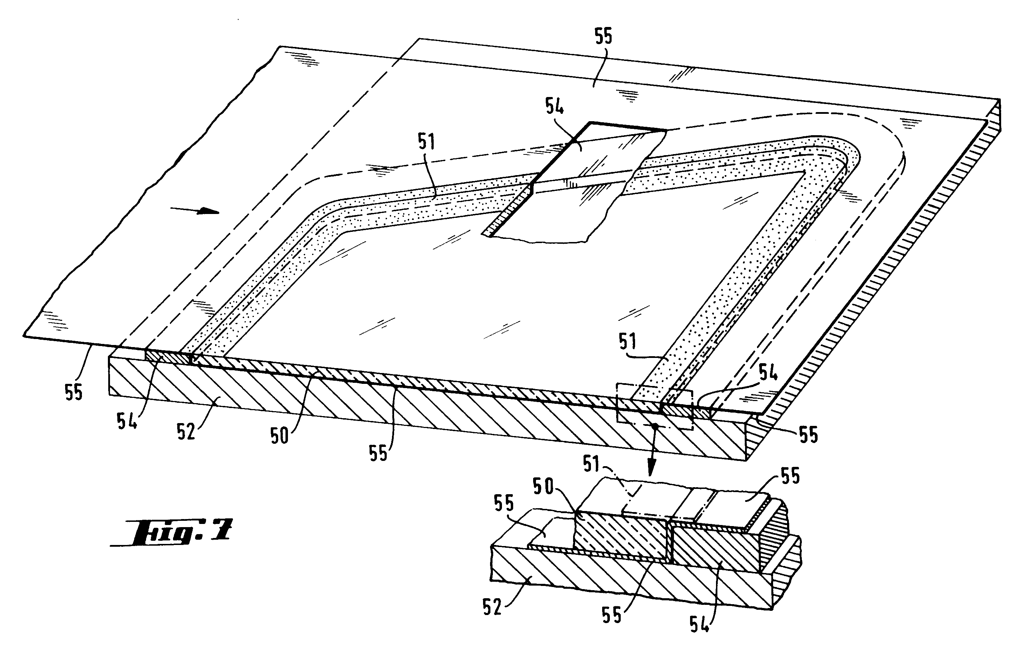

Lorsque, en suivant le principe décrit avec référence à la Fig. 5, on veut imprimer un décor en forme de cadre sur tout le pourtour d'un vitrage, on peut à cet effet utiliser un dispositif dont la structure de base est illustrée sur la Fig. 6. Le vitrage 38 est à nouveau placé dans l'évidement 39 d'une plaque de support 40, dont les surfaces 41 adjacentes à l'évidement 39 se trouvent au même niveau que la surface du vitrage 38, compte tenu éventuellement de l'épaisseur de la bande de papier. Dans ce cas, l'ensemble du domaine de la surface 41, adjacent à l'évidement 39, est recouvert par des bandes de papier. Tandis qu'une bande de papier 42 est tendue dans un sens parallèle au bord 43 du vitrage 38, une seconde bande de papier 44 est tendue en travers de la bande de papier 42, au-dessus de la plaque de support 40. La largeur des deux bandes de papier 42, 44 correspond chaque fois à la largeur de l'évidement 39 dans le sens correspondant. Les domaines de la surface 41 de la plaque de support 40 voisins des bords 43, 45, 46 du vitrage sont, de cette façon, recouverts par les bandes de papier. Les coins de la surface de moulage 41 subsistant entre les deux bandes de papier 42, 44 sont recouverts par une autre bande de papier 47. La bande de papier 47 peut être relativement étroite et est contiguë à la bande de papier 42. Elle est disposée en dessous de la bande de papier 44, de sorte que, dans la zone du bord 43 du vitrage, seule la bande de papier 44 forme l'élément plan se raccordant à la surface du vitrage. Comme décrit à propos de la Fig. 5, les bandes de papier 42, 44, 47 sont initialement tendues au-dessus de la plaque de support 40. Le vitrage 38 est ensuite posé sur les bandes de papier 42, 44 et est placé dans l'évidement 39, conjointement avec ces bandes de papier. Le cadre décoratif 48 est alors imprimé, par exemple par sérigraphie, sur le vitrage alors placé dans l'évidement de la plaque de support. Lorsque l'encre est suffisamment sèche, le vitrage est enlevé de l'évidement 39 et est détaché des bandes de papier. Le vitrage est alors traité ultérieurement de la manière habituelle.

Le dispositif représenté fragmentairement sur la Fig. 7 convient également pour imprimer sur un vitrage plan 50, de n'importe quelle forme périphérique, un décor en forme de cadre 51 allant exactement jusqu'au bord périphérique du vitrage. Dans ce cas, le dispositif comprend une table 52 à surface plane sur laquelle un cadre formant pochoir 54, correspondant à l'épaisseur du vitrage 50, est disposé. La forme périphérique interne du cadre 54 correspond à la forme périphérique externe du vitrage 50. Au-dessus du cadre 54 est tendue une bande 55 d'un papier de soie approprié ou d'une matière textile adéquate ou encore d'une pellicule de matière plastique qui s'applique de tous côtés sur le cadre 54 lorsque le vitrage 50 est placé à l'intérieur de ce cadre 54 sur la table 52. Bien entendu, la matière formant la bande 55 doit être très mince et, en outre, être si flexible et si déformable que, dans les zones de coin du cadre 54, aucun faux pli ne soit formé. Le cadre décoratif 51 est imprimé comme dans les exemples décrits plus haut, par sérigraphie, au-delà du bord du vitrage, jusque sur la bande de papier 55. Le vitrage 50 est ensuite glissé, conjointement avec le cadre 54 et la bande de papier 55, dans un poste de séchage suivant. Après le séchage de l'encre, le vitrage 50 est détaché de la bande de papier 55 et est soumis à des traitements ultérieurs.

## Revendications

1. Procédé pour imprimer, sur un vitrage, une couche décorative qui, au moins dans un domaine sélectionné, s'étend exactement jusqu'au bord périphérique du vitrage, caractérisé en ce qu'au moins dans le domaine sélectionné du vitrage, un élément plan qui élargit la surface à imprimer au-delà du bord du vitrage est disposé tout contre ce bord du vitrage, la couche décorative est imprimée au-delà du bord du vitrage jusque sur l'élément plan et, après le séchage de l'encre, l'élément plan est séparé du vitrage.

2. Procédé suivant la revendication 1, caractérisé en ce que, pour former l'élément plan élargissant la surface du vitrage, on colle une bande profilée faite d'une matière élastiquement déformable, sur la face périphérique du vitrage.

3. Procédé suivant la revendication 1, caractérisé en ce que, pour former l'élément plan élargissant la surface du vitrage, on moule sur la face périphérique du vitrage un cordon en une matière durcissable et adhérant à la face périphérique du vitrage.

4. Procédé suivant la revendication 3, caractérisé en ce que le cordon formant l'élément plan est fait d'une matière durcissable inorganique.

5. Procédé suivant la revendication 3, caractérisé en ce que le cordon formant l'élément plan est fait d'une matière polymère durcissable.

6. Procédé suivant la revendication 5, caractérisé en ce qu'on utilise un polymère thermoplastique pour former un cordon.

7. Procédé suivant la revendication 5, caractérisé en ce qu'on utilise un système de réaction à un ou plusieurs composants pour former le cordon.

8. Procédé suivant l'une quelconque des revendications 3 à 7, caractérisé en ce que l'on place le vitrage (1) dans un moule (2) pourvu d'un évidement superficiel (4) et, pour former l'élément plan élargissant la surface du vitrage, on remplit l'interstice (7) formé entre la face périphérique (6) du vitrage (1) et la paroi de délimitation (5) de l'évidement (4) opposée à cette face périphérique, au moyen d'une matière polymère durcissable.

9. Procédé suivant l'une quelconque des revendications 3 à 7, caractérisé en ce qu'on place le vitrage (18) sur une plaque de support (19) plus grande que ce vitrage (18) et on extrude le cordon (23) formant l'élément plan à l'aide d'une filière d'extrusion calibrée (22), sur la face périphérique (24) du vitrage (18).

10. Procédé suivant la revendication 8 ou 9, caractérisé en ce qu'on enduit la surface du moule (2) ou de la plaque de support (19) entrant en contact avec la matière durcissable, au moyen d'un agent de démoulage.

11. Procédé suivant la revendication 1, caractérisé en ce qu'on utilise une bande de papier, de pellicule de matière plastique ou de matière textile soutenue par une partie de moule adjacente au bord du vitrage, pour former l'élément plan élargissant la surface du vitrage.

12. Procédé suivant la revendication 11, caractérisé en ce que, pour imprimer la bande décorative (38; 48), on place le vitrage (28; 38) sur une plaque de support (31; 40) pourvue d'un évidement superficiel (30; 39) correspondant au vitrage, les zones de la surface (33; 41) de la plaque adjacente à l'évidement (30; 39) étant recouvertes par une bande de papier (32; 42; 44) s'étendant à l'intérieur de l'évidement (30; 39), entre le vitrage (28; 38) et le fond de l'évidement (30; 39).

13. Procédé suivant la revendication 12, caractérisé en ce que les zones de coin de la surface de moulage (41) situées aux croisements de deux bandes de papier (42; 44) sont recouvertes par une autre bande de papier étroite (47).

14. Dispositif pour l'exécution du procédé suivant la revendication 11, caractérisé par une table plane (52), un cadre formant pochoir (54) élargissant la surface du vitrage (50) et correspondant à la forme et à la grandeur du vitrage (50), disposé sur la table (52), et une bande (55) de papier souple, en particulier de papier de soie, pouvant être avancée après chaque opération d'impression et couvrant le cadre (54) de tous côtés.

15. Procédé suivant l'une quelconque des revendications 1 à 14, caractérisé en ce que la couche décorative (15; 34; 48) est appliquée par sérigraphie sur la surface du vitrage.

## Claims

1. Method of printing, on to a pane, a decorative coating which, at least within a selected region, extends exactly to the peripheral edge of the pane, characterized in that, at least in the selected region of the pane, a plane element which extends the surface to he printed beyond the edge of the pane is disposed immediately against this edge of the pane, the decorative coating is printed beyond the edge of the pane on to the plane element and, after drying of the ink, the plane element is separated from the pane.

2. Method according to claim 1, characterized in that, for forming the plane element which extends the surface of the pane, a profiled strip made of an elastically deformable material is glued on to the peripheral face of the pane.

3. Method according to claim 1, characterized in that, for forming the plane element which extends the surface of the pane, a cord of a material that can he hardened and will adhere to the peripheral face of the pane is moulded on to the peripheral face of the pane.

4. Method according to claim 3, characterized in that the cord forming the plane element is made of an inorganic hardening material.

5. Method according to claim 3, characterized in that the cord forming the plane element is made of a hardening polymer material.

6. Method according to claim 5, characterized in that a thermoplastic polymer is used for forming a cord.

7. Method according to claim 5, characterized in that a single-component or multi-component reaction system is used for forming the cord.

8. Method according to any one of claims 3 to 7, characterized in that the pane (1) is placed in a mould (2) provided with a surface recess (4) and, for forming the plane element which extends the surface of the pane, the gap (7) formed between the peripheral face (6) of the pane (1) and the boundary wall (5) of the recess (4) opposite this peripheral face is filled with a hardening polymer material.

9. Method according to any one of claims 3 to 7, characterized in that the pane (18) is placed on a support plate (19) larger than this pane (18), and the cord (23) forming the plane element is extruded by means of a calibrated extrusion die (22) on to the peripheral face (24) of the pane (18).

10. Method according to claim 8 or 9, characterized in that the surface of the mould (2) or of the support plate (19) coming into contact with the hardening material is coated with a demoulding agent.

11. Method according to claim 1, characterized in that a strip of paper, plastics material film or textile material, supported by a mould part adjacent to the edge of the pane, is used for forming the plane element which extends the surface of the pane.

12. Method according to claim 11, characterized in that, for printing the decorative strip (38 ; 48), the pane (28 ; 38) is placed on a support plate (31 ; 40) provided with a surface recess (30 ; 39) corresponding to the pane, the zones of the surface (33 ; 41) of the plate adjacent to the recess (30 ; 39) being covered with a strip of paper (32 ; 42 ; 44) extending to the inside of the recess (30 ; 39), between the pane (28 ; 38) and the bottom of the recess (30 ; 39).

13. Method according to claim 12, characterized in that the corner zones of the moulding surface (41) situated at the intersections of two paper strips (42 ; 44) are covered by another narrow paper strip (47).

14. Device for carrying out the method according to claim 11, characterized by a plane table (52), a frame forming a stencil (54) extending the surface of the pane (50) and corresponding to the shape and the size of the pane (50), disposed on the table (52), and a strip (55) of pliable paper, especially tissue paper, capable of being advanced after each printing operation and covering the frame (54) on all sides.

15. Method according to any one of claims 1 to 14, characterized in that the decorative coating (15 ; 34 ; 48) is applied by screen printing on to the surface of the pane.

## Patentansprüche

1. Verfahren zum Bedrucken einer Glasscheibe mit einer Dekorschicht, die wenigstens in einem ausgewählten Bereich bis unmittelbar an die Umfangskante der Glasscheibe heranreicht, **dadurch gekennzeichnet** , daß zumindest in dem ausgewählten Bereich der Glasscheibe unmittelbar an die Glasscheibenkante anschließend ein die zu bedruckende Oberfläche über die Glasscheibenkante hinaus erweiterndes Flächenelement angeordnet, die Dekorschicht über die Glaskante hinaus bis auf das Flächenelement aufgedruckt, und nach dem Trocknen der Druckfarbe das Flächenelement von der Glasscheibe getrennt wird.

2. Verfahren nach Anspruch 1, dadurch gekennzeichnet, daß zur Bildung des die Glasoberfläche erweiternden Flächenelements ein Profilstreifen aus einem elastisch verformbaren Material auf die Umfangsfläche der Glasscheibe aufgeklebt wird.

3. Verfahren nach Anspruch 1, dadurch gekennzeichnet, daß zur Bildung des die Glasoberfläche erweiternden Flächenelements ein Strang aus einer aushärtenden und auf der Umfangsfläche der Glasscheibe haftenden Masse an der Umfangsfläche der Glasscheibe angeformt wird.

4. Verfahren nach Anspruch 3, dadurch gekennzeichnet, daß der das Flächenelement bildende Strang aus einer Masse aus anorganischem härtenden Material besteht.

5. Verfahren nach Anspruch 3, dadurch gekennzeichnet, daß der das Flächenelement bildende Strang aus einer härtenden Polymermasse besteht.

6. Verfahren nach Anspruch 5, dadurch gekennzeichnet, daß zur Bildung des Strangs ein thermoplastisches Polymer verwendet wird.

7. Verfahren nach Anspruch 5, dadurch gekennzeichnet, daß zur Bildung des Strangs ein Ein- oder Mehrkomponenten-Reaktionssystem verwendet wird.

8. Verfahren nach einem der Ansprüche 3 bis 7, dadurch gekennzeichnet, daß die Glasscheibe (1) in eine mit einer Oberflächenausnehmung (4) versehene Form (2) eingelegt und zur Bildung des die Glasoberfläche erweiternden Flächenelements der zwischen der Umfangsfläche (6) der Glasscheibe (1) und der dieser gegenüberliegenden Begrenzungswand (5) der Ausnehmung (4) gebildete Hohlraum (7) mit der aushärtenden Polymermasse gefüllt wird.

9. Verfahren nach einem der Ansprüche 3 bis 7, dadurch gekennzeichnet, daß die Glasscheibe (18) auf eine im Vergleich zur Glasscheibe (18) größere Trägerplatte (19) aufgelegt und der das Flächenelement bildende Strang (23) mit Hilfe einer kalibrierten Extrusionsdüse (22) an die Umfangsfläche (24) der Glasscheibe (18) angespritzt wird.

10. Verfahren nach Anspruch 8 oder 9, dadurch gekennzeichnet, daß die mit der aushärtenden Masse in Berührung kommende Oberfläche der Form (2) bzw. der Trägerplatte (19) mit einem Trennmittel beschichtet wird.

11. Verfahren nach Anspruch 1, dadurch gekennzeichnet, daß zur Bildung des die Glasoberfläche erweiternden Flächenelements eine von einem an die Glasscheibenkante anschließenden Formteil unterstützte Papier-, Kunststoffolien- oder Textilbahn verwendet wird.

12. Verfahren nach Anspruch 11, dadurch gekennzeichnet, daS die Glasscheibe (28;38) zum Aufdrucken des Dekorstreifens (34;48) auf eine mit einer der Glasscheibe entsprechenden Oberflächenausnehmung (30;39) versehene Trägerplatte (31;40) aufgelegt wird, deren an die Ausnehmung (30;39) anschließenden Bereiche der Oberfläche (33;41) durch eine innerhalb der Ausnehmung (30;39) zwischen der Glasscheibe (28;38) und dem Boden der Ausnehmung (30;39) verlaufende Papierbahn (32;42;44) abgedeckt sind.

13. Verfahren nach Anspruch 12, dadurch gekennzeichnet, daß die Zwickelbereiche der Formoberfläche (41) an den Kreuzungsstellen zweier Papierbahnen (42,44) durch eine weitere schmale Papierbahn (47) abgedeckt werden.

14. Vorrichtung zur Durchführung des Verfahrens nach Anspruch 11, gekennzeichnet durch eine ebene Tischplatte (52), einen auf der Tischplatte (52) angeordneten, der Form und Größe der Glasscheibe (50) entsprechenden und die Oberfläche der Glasscheibe (50) erweiternden schablonenartigen Rahmen (54) und eine den Rahmen (54) auf allen Seiten überdeckende, nach jedem Druckvorgang weitertransportierbare Bahn (55) aus nachgiebigem Papier, insbesondere Seidenpapier.

15. Verfahren nach einem oder mehreren der Ansprüche 1 bis 14, dadurch gekennzeichnet, daß die Dekorschicht (15;34;48) mit Hilfe des Siebdruckverfahrens auf die Glasoberfläche aufgebracht wird.
